(19) Europäisches Patentamt
European Patent Office
Office européen des brevets

(11) **EP 3 502 746 B1**

(12) **FASCICULE DE BREVET EUROPEEN**

(45) Date de publication et mention
de la délivrance du brevet:
**23.11.2022 Bulletin 2022/47**

(21) Numéro de dépôt: **18212860.3**

(22) Date de dépôt: **17.12.2018**

(51) Classification Internationale des Brevets (IPC):
**G01S 19/21** *(2010.01)*   *G01S 19/37* *(2010.01)*

(52) Classification Coopérative des Brevets (CPC):
**G01S 19/21;** G01S 19/37

(54) **RÉCEPTEUR DE SIGNAUX, EN PARTICULIER DE SIGNAUX GNSS, COMPRENANT UN FILTRE DE RÉJECTION D'INTERFÉRENCES, ET PROCÉDÉ ASSOCIÉ**

SIGNALEMPFÄNGER, INSBESONDERE VON GNSS-SIGNALEN, DER EINEN SPERRFILTER FÜR INTERFERENZEN UMFASST, UND ENTSPRECHENDES VERFAHREN

SIGNAL RECEIVER, IN PARTICULAR FOR GNSS SIGNALS, COMPRISING AN INTERFERENCE REJECTION FILTER, AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1701348**

(43) Date de publication de la demande:
**26.06.2019 Bulletin 2019/26**

(73) Titulaire: **Thales**
**92400 Courbevoie (FR)**

(72) Inventeurs:
• **MARTIN, Nicolas**
**26000 Valence Cedex (FR)**
• **PERRE, Jean-Michel**
**26000 Valence Cedex (FR)**
• **BASTIEN, Nicolas**
**26000 Valence Cedex (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2009 004 990    US-A1- 2012 314 821**
**US-B1- 6 816 539**

• **TRINKLE ET AL: "GPS interference mitigation; Overview and experimental results", PROCEEDINGS OF THE 5TH INTERNATIONAL SYMPOSIUM ON SATELLITE NAVIGATION TECHNOLOGY & APPLICATIONS CANBERRA, AUSTRALIA, MENAY / GPS SOCIETY, 1 January 2001 (2001-01-01), pages 1-14, XP007911320, ISBN: 978-1-86499-540-4**
• **PRZYJEMSKI JOSEPH ET AL: "GPS Anti- Jam Enhancement Techniques", 49TH AM - PROCEEDINGS OF THE 49TH ANNUAL MEETING OF THE INSTITUTE OF NAVIGATION, THE INSTITUTE OF NAVIGATION, 8551 RIXLEW LANE SUITE 360 MANASSAS, VA 20109, USA, 23 June 1993 (1993-06-23), pages 41-50, XP056007186,**

**Description**

L'invention concerne le domaine de récepteurs de signaux qui sont susceptibles d'être perturbés par un signal interférent. L'invention concerne en particulier le domaine des récepteurs de signaux de radionavigation par satellite, ou récepteurs GNSS. Elle porte sur un récepteur comprenant un filtre de réjection d'interférences.

Un objectif général de l'invention est de permettre une démodulation correcte des signaux reçus par un récepteur même lorsque ceux-ci sont perturbés par un signal interférent à enveloppe constante, c'est-à-dire à amplitude constante. Plus précisément, un objectif de l'invention est d'améliorer le rendement, c'est-à-dire le rapport signal à bruit, après démodulation, lorsque le signal reçu est superposé à un signal interférent à enveloppe constante.

Une solution possible pour démoduler un signal perturbé par un signal interférent à enveloppe constante est décrite dans la demande de brevet européenne EP 2336800. Cette solution est basée sur une quantification du signal sur trois niveaux : +1, 0 et -1. Elle nécessite de quantifier le signal analogique précisément sur les extrema et les passages à 0 du signal pour maximiser la sensibilité par rapport au signal utile sans augmenter la puissance du bruit. Cette solution présente l'inconvénient de nécessiter un asservissement très précis du contrôle automatique de gain afin de positionner précisément l'amplitude du signal analogique reçu par rapport aux seuils de quantification du convertisseur analogique numérique. Par ailleurs, cette solution présente un rendement sous optimal.

D'autres récepteurs utilisent une technique consistant à retirer au signal reçu numérisé complexe en bande de base, une composante dont le module est égal au module moyen estimé du signal reçu et la direction égale à celle du signal reçu. Cette technique présente l'inconvénient de nécessiter une architecture comprenant des algorithmes de type CORDIC (coordinate rotation digital computer) agencés en cascade, qui sont complexes à implémenter.

On connait par ailleurs la solution décrite dans le brevet américain US 6816539, et les solutions du document "GPS interference mitigation; Overview and experimental results" par TRINKLE ET AL (1 janvier 2001), et du document "GPS Anti- Jam Enhancement Techniques" par PRZY JEMSKI JOSEPH ET AL (23 juin 1993).

L'invention propose de mettre en œuvre un filtre de réjection d'interférences qui comprend essentiellement l'application d'une fonction non linéaire sous la forme d'un gain multiplicatif, aux voies en phase et en quadrature du signal reçu et numérisé. La solution proposée présente une complexité d'implémentation réduite et un rendement optimal.

L'invention a pour objet un récepteur de signaux susceptibles d'être perturbés par un signal interférent, comme défini par les revendications 1 à 12.

L'invention a aussi pour objet un procédé de réception de signaux susceptibles d'être perturbés par un signal interférent, comme défini par les revendication 13 et 14.

D'autres caractéristiques et avantages de la présente invention apparaîtront mieux à la lecture de la description qui suit en relation aux dessins annexés qui représentent :

- La figure 1, un diagramme illustrant la densité de probabilité d'un signal interférent à enveloppe constante auquel est ajouté un bruit blanc Gaussien,
- La figure 2, un synoptique d'un récepteur de signaux selon l'invention,
- La figure 3, un synoptique d'une première variante d'implémentation d'un récepteur de signaux selon l'invention,
- La figure 4, un synoptique d'une seconde variante d'implémentation d'un récepteur de signaux selon l'invention,
- La figure 5, un diagramme représentant la densité de probabilité d'un signal interférent à enveloppe constante auquel est ajouté un bruit blanc Gaussien pour différents rapports entre la puissance du signal interférent et la puissance du bruit,
- La figure 6, un diagramme représentant le gain optimal à appliquer au signal reçu en fonction du module du signal et pour différents rapports entre la puissance du signal interférent et la puissance du bruit,
- La figure 7, un zoom du diagramme de la figure 6 sur une plage de valeurs plus réduite,
- La figure 8, un diagramme représentant les pertes de rapport signal à bruit dues au signal interférent avec et sans application de l'invention,
- La figure 9, un organigramme décrivant les étapes d'un procédé de réception d'un signal selon l'invention.

L'invention consiste à appliquer un filtre anti-interférences au signal reçu par un récepteur, sur la voie en phase et la voie en quadrature du signal, après numérisation du signal.

Le signal analogique reçu est préalablement transposé en bande de base sur une voie en phase et une voie en quadrature Q puis numérisé au moyen d'un convertisseur analogique-numérique.

Selon un mode de réalisation de l'invention, le récepteur comprend par ailleurs un dispositif de contrôle automatique de gain, sur chaque voie I,Q, qui permet d'assurer une puissance moyenne constante du signal sur chaque voie. Dans un autre mode de réalisation de l'invention, le contrôle automatique de gain n'est pas présent.

Le filtre anti-interférences consiste en l'application d'une fonction non linéaire au signal complexe représenté par les voies I,Q.

On décrit tout d'abord la théorie à la base de l'invention.

En présence de bruit non Gaussien, il est possible d'améliorer le rapport signal à bruit du signal après démodulation en appliquant une fonction non linéaire f au signal en amont de la démodulation.

En présence d'un signal interférent à enveloppe constante, le bruit impactant le signal reçu est non Gaussien, on peut donc appliquer cette théorie.

On note $I_{optimal}$ et $Q_{optimal}$, les signaux en phase (respectivement en quadrature) après application du filtre anti-interférences. Le rapport signal à bruit mesuré sur ces signaux est optimal lorsqu'on applique une fonction non linéaire au signal telle que définie par les relations suivantes :

$$I_{optimal}\ (I,Q)\ =\ -\ \partial P/\partial I\ /\ P(I,Q) \qquad (1)$$

$$Q_{optimal}(I,Q)\ =\ -\ \partial P/\partial Q\ /\ P(I,Q) \qquad (2)$$

$P(I,Q)$ est la densité de probabilité du signal selon les deux dimensions I et Q.
$\partial P/\partial I$ est la dérivée partielle de P par rapport à I.
$\partial P/\partial Q$ est la dérivée partielle de P par rapport à Q.

Les relations (1) et (2) sont démontrées en annexe 1 à la fin de la description.

On suppose que la densité de probabilité suit une symétrie de révolution dans le plan (I,Q) par apport au point (0,0). Cette hypothèse est légitime dans la mesure où les voies I et Q jouent un rôle équivalent, interchangeable, liées aux aléas de l'horloge du récepteur au moment du passage en bande de base.

On note $P(I,Q) = f(\rho)$, avec p le module du signal complexe dont la partie réelle correspond à la voie en phase I et la partie imaginaire correspond à la voie en quadrature Q.

Par ailleurs, on a $\partial P/\partial I = \partial P/\partial \rho\ .\ \partial \rho/\partial I + \partial P/\partial \theta\ .\ \partial \theta/\partial I$.

En notation polaire, on a $+ jQ = \rho \exp(j\theta)$

Sachant que $\theta P/\partial \theta = 0$, $\partial P/\partial \rho = f'(\rho)$ et $\partial \rho/\partial I = I / \rho$, la relation (1) devient :

$$I_{optimal}\ (I,Q)\ =\ -\ \partial P/\partial I\ /\ P(I,Q)\ =\ -\ \partial \rho/\partial I\ .\ f'(\rho)\ /\ f(\rho)\ =\ -\ I\ /\rho\ .\ f'(\rho)\ /$$
$$f(\rho)\ =\ I\ .\ K(\rho).$$

De même, la relation (2) devient:

$$Q_{optimal}(I,Q)\ =\ -\ \partial P/\partial Q\ /\ P(I,Q)\ =\ -\ \partial \rho/\partial Q.\ f'(\rho)\ /\ f(\rho)\ =\ -\ Q/\rho\ .\ f'(\rho)\ /$$
$$f(\rho)\ =\ Q\ .\ K(\rho)$$

Ainsi, la fonction non linéaire à appliquer au signal est :

$$K(\rho) = -\ 1\ /\rho\ .\ f'(\rho)\ /\ f(\rho) \qquad (3)$$

Pour calculer K(p), il faut au préalable déterminer la densité de probabilité f(p). La densité de probabilité d'un signal composé d'un signal interférent à amplitude constante A et d'un bruit Gaussien de variance $\sigma^2$ est donné par la formule suivante :

$$f(\rho) = P(I,0) = \int_{0}^{2\pi} \frac{1}{2\pi}\ \frac{1}{\left(\sqrt{2\pi}\sigma\right)^2}\ \exp\left(-\frac{\left(I - A.\cos\theta\right)^2 + \left(A.\sin\theta\right)^2}{2\sigma^2}\right) d\theta \quad \text{pour } I = \rho \quad (4)$$

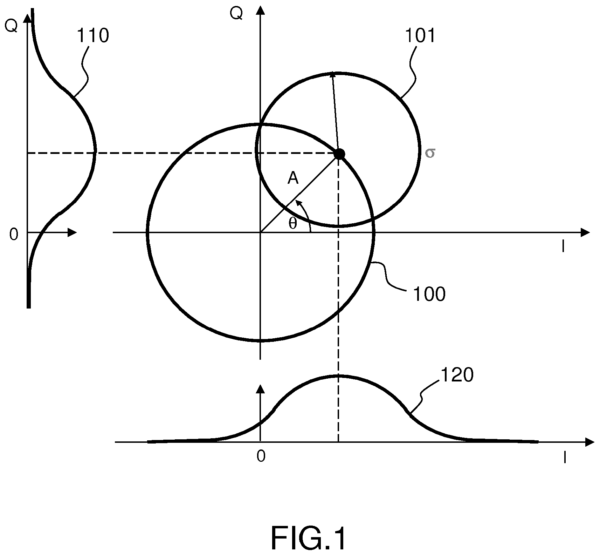

La figure 1 schématise, sur un diagramme I,Q, l'allure d'un signal interférent 100 à amplitude constante A et phase variable $\theta$, auquel est ajouté un bruit Gaussien 101. La densité de probabilité P du signal résultant est représentée en projection sur l'axe I par la courbe 120 et en projection sur l'axe Q par la courbe 110.

La densité de probabilité f(p) dépend donc uniquement du rapport $J/N= A^2/\sigma^2$ entre la puissance du signal interférent et la puissance du bruit Gaussien.

A partir des principes décrits ci-dessus, l'invention propose un récepteur 200 comprenant un filtre de réjection d'interférences qui consiste à appliquer, sur chacune des voies I et Q du signal numérique, un gain K(p) dépendant du module du signal et du rapport J/N.

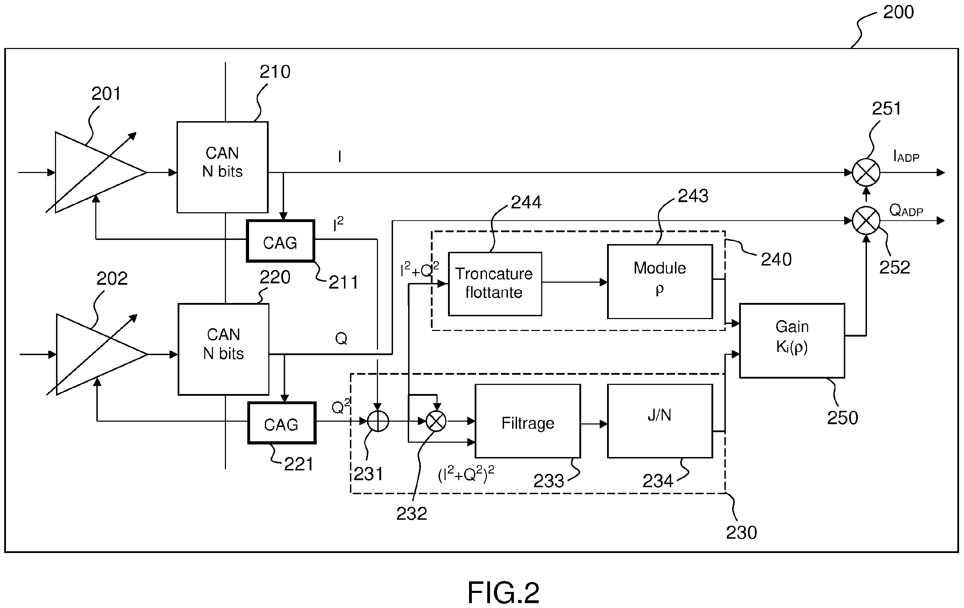

Le récepteur 200 comprend ainsi deux voies de réception du signal en phase I et en quadrature Q résultant de la transposition du signal analogique en bande de base (non représentée sur la figure 2).

Le récepteur 200 comprend notamment, sur chacune des voies I,Q, un amplificateur 201, 202, un convertisseur analogique-numérique 210,220 et un dispositif de contrôle automatique de gain 211, 221 pour garantir une puissance du signal constante sur chaque voie avant numérisation du signal.

Le récepteur 200 comporte également un filtre anti-interférences comprenant un gain multiplicatif $K_i(\rho)$ 250 qui reçoit en entrée d'une part le module p du signal calculé par une unité de calcul 240 et d'autre part une estimée i du rapport J/N déterminée par un estimateur 230.

Selon un mode de réalisation particulier de l'invention, le rapport J/N peut être estimé en calculant le ratio entre le moment d'ordre 4 du signal et le moment d'ordre 2 élevé au carré.

A cet effet, l'estimateur 230 comprend un additionneur 231 pour sommer les signaux élevés au carré en sortie des dispositifs de contrôle automatique de gain 211, 221 respectifs des voies I et Q et un multiplieur 232 pour élever la sortie de l'additionneur 231 au carré.

L'estimateur 230 comprend aussi un filtre 233 pour réaliser une moyenne de la sortie $(I^2+Q^2)^2$ du multiplieur 232 afin de calculer le moment d'ordre 4. Le filtre 233 est aussi configuré pour réaliser une moyenne de la sortie $I^2+Q^2$ de l'additionneur 231, puis élever la moyenne au carré afin de calculer le moment d'ordre 2 élevé au carré. L'estimée du ratio J/N est ensuite obtenue en faisant le ratio entre le moment d'ordre 4 du signal et le moment d'ordre 2 élevé au carré.

Le calcul du moment d'ordre 2 est notamment nécessaire en l'absence d'un dispositif de contrôle automatique de gain 211,221 ou plus généralement lorsque la puissance du signal reçu ne peut être considérée comme étant constante.

Alternativement, lorsqu'un dispositif de contrôle automatique de gain 211,221 est utilisé, comme illustré sur la figure 2, on peut considérer que la puissance du signal reçu est constante. Dans ce cas, le moment d'ordre 2 peut être directement pris égal à la consigne de puissance utilisée par les dispositifs de contrôle automatique de gain 211,221 utilisés pour corriger l'amplitude des signaux reçus.

Dans ce cas, le calcul du moment d'ordre deux du signal n'est pas nécessaire.

L'unité de calcul 240 comprend essentiellement une unité 243 de calcul du module p du signal qui peut être implémentée, par exemple, au moyen d'une table qui encode les valeurs de la racine carrée de $I^2+Q^2$, ou par un calcul direct, selon les contraintes de complexité du récepteur. Optionnellement, afin de limiter le nombre de bits et donc la capacité de la table utilisée pour implémenter le calcul du module p, l'unité de calcul 240 comprend un organe de troncature 244 de la sortie de l'additionneur 231 pour limiter le nombre de bits en entrée de l'unité 243.

Dans le cas où le récepteur ne comprend pas de dispositif de contrôle automatique de gain 211,221 ou plus généralement que la puissance du signal ne peut être supposée comme étant constante, l'unité 243 de calcul du module p du signal comprend un calcul de la puissance moyenne du signal et une normalisation du module p par la racine carrée de la puissance moyenne calculée.

Le gain multiplicatif 250 $K_i(\rho)$ peut être implémenté sous la forme d'une table qui stocke différentes valeurs de la fonction non linéaire K(p) en fonction des valeurs possibles du module p et du rapport J/N.

Le récepteur 200 comporte enfin deux multiplieurs 251, 252 sur chacune des voies I,Q du signal numérisé, pour multiplier le signal par le gain fourni par la table 250.

Sans sortir du cadre de l'invention, toute autre implémentation du filtre anti-interférences permettant de réaliser la même fonction de correction des voies I et Q du signal par un gain correctif calculé à partir de la relation (3), est possible.

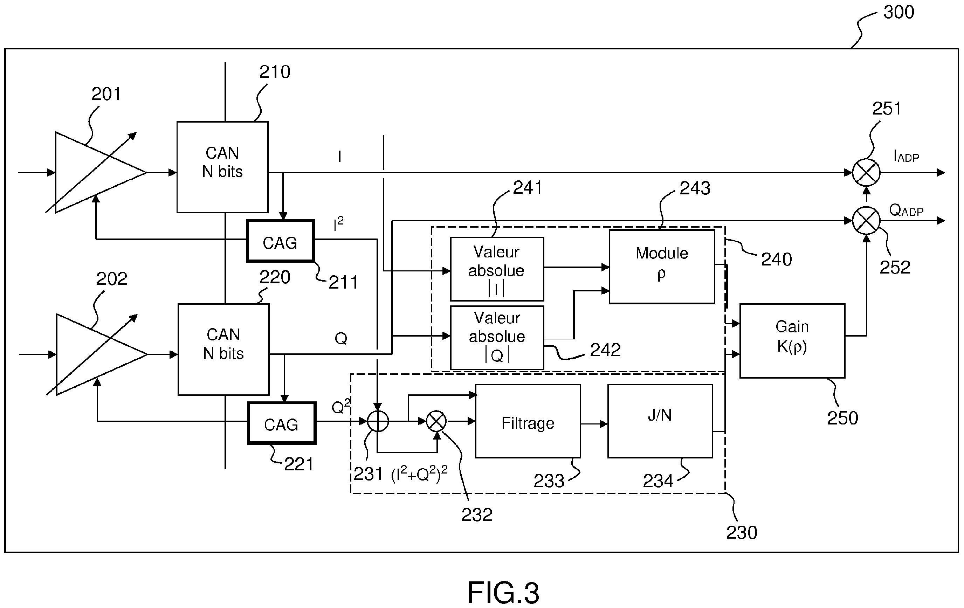

La figure 3 schématise une variante de réalisation 300 du récepteur selon l'invention.

Dans cette variante, l'unité de calcul 240 comporte une première unité 241 de calcul de la valeur absolue de la voie en phase I du signal et une seconde unité 242 de calcul de la valeur absolue de la voie en quadrature Q du signal qui viennent alimenter la table 243 de calcul du module p du signal dont les valeurs sont directement pré-calculées en fonction des valeurs de |I| et |Q|.

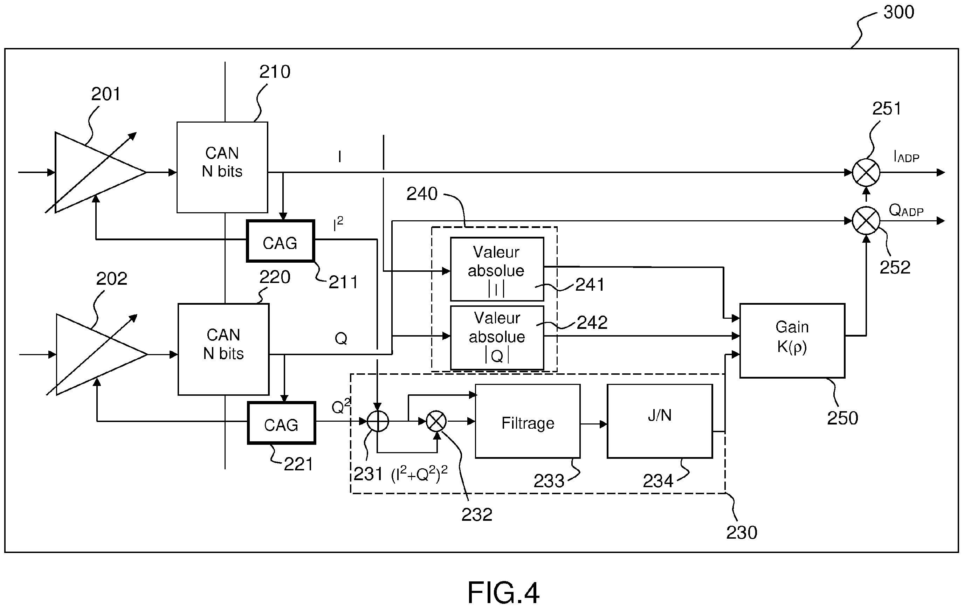

La figure 4 schématise une autre variante de réalisation 400 du récepteur selon l'invention.

Dans cette variante, la table 250 de calcul du gain $K_i(\rho)$ comporte trois entrées au lieu de deux. Les valeurs du gain $K_i(\rho)$ sont directement pré-calculées en fonction du rapport J/N et des valeurs absolues de I et Q fournies par les unités de calcul 241,242.

Dans un mode de réalisation particulier de l'invention non représenté sur les figures, l'estimateur 230 du ratio J/N est supprimé et on fixe une valeur a priori du ratio J/N, par exemple une valeur maximale correspondant à un pire cas. Cette valeur a priori est utilisée pour calculer la fonction non linéaire K(p). Dans ce mode de réalisation particulier, la table 250 de stockage des valeurs du gain multiplicatif ne comporte qu'une seule entrée reliée à la sortie de l'unité 243 de calcul du module p. Ce mode particulier est applicable aux architectures décrites aux figures 2,3 et 4 dans lesquelles, pour mettre en œuvre ce mode, l'estimateur 230 est supprimé et la table 250 comporte respectivement une seule entrée (figure 2 et figure 3) ou deux entrées (figure 4).

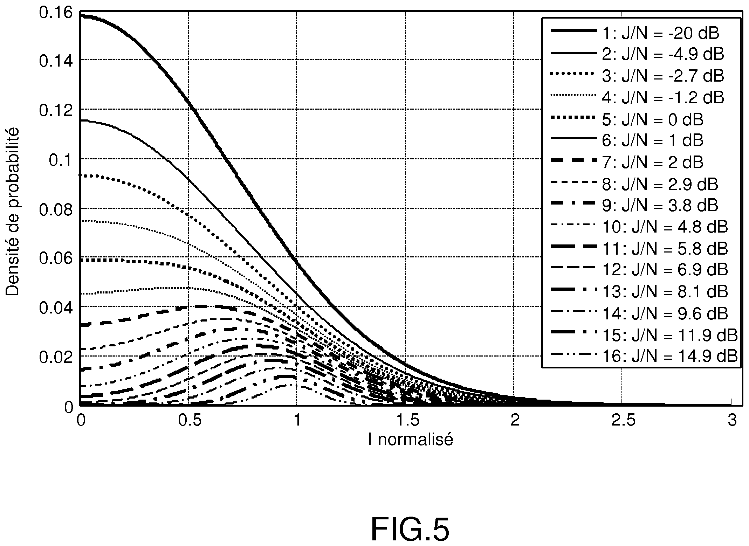

La figure 5 représente, sur un diagramme, la densité de probabilité f(p), par exemple estimée au moyen de la relation (4) pour seize valeurs différentes du ratio J/N, en fonction de la valeur du signal sur la voie I, cette valeur étant normalisée. On obtient les mêmes courbes pour la voie Q.

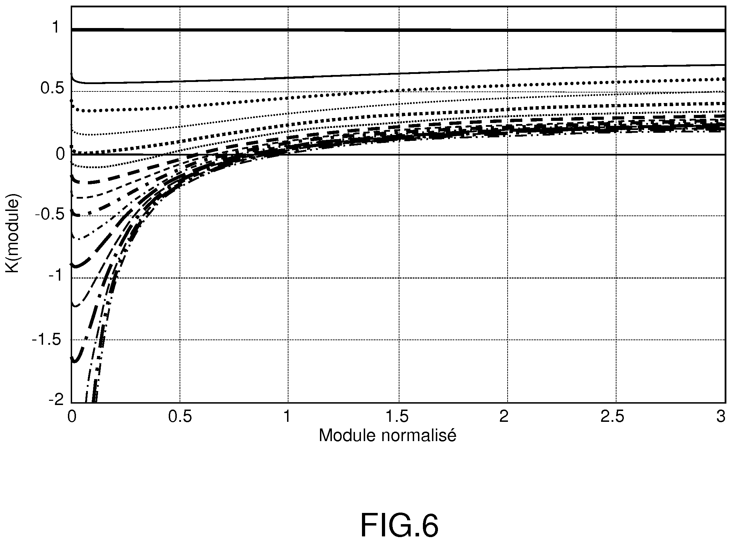

A partir des courbes de la figure 5, on en déduit les valeurs du gain $K_i(p)$ en fonction des différentes valeurs du ratio J/N et du module du signal normalisé, qui sont représentées par les courbes de la figure 6.

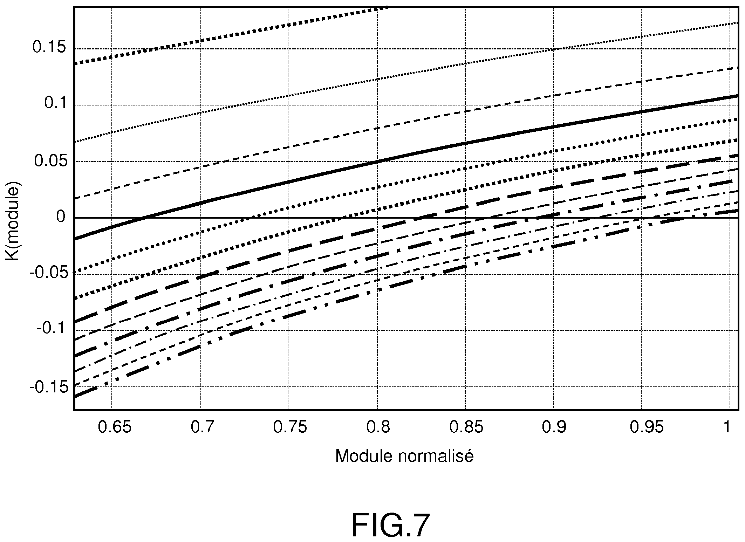

La figure 7 représente un zoom de la figure 6 sur une plage de valeurs réduite.

La table 250 contient ainsi différentes valeurs pré-calculées du gain $K_i(p)$ à l'aide des courbes des figures 6 ou 7.

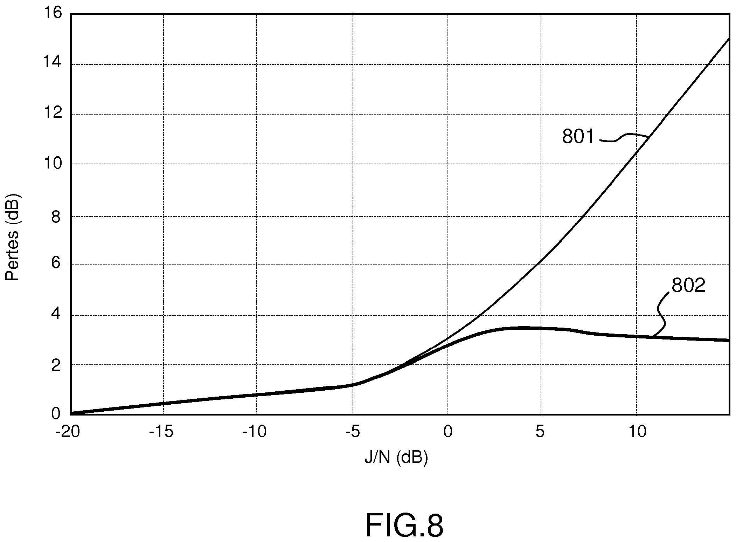

La figure 8 représente les pertes (exprimées en dB) de rapport signal à bruit dues à la présence du signal interférent respectivement sans (courbe 801) et après (courbe 802) application de l'invention, en fonction du ratio J/N (exprimé en dB).

On remarque un gain de performances en utilisant l'invention à partir d'un ratio de J/N supérieur à 0 dB. On voit ainsi que l'invention permet d'améliorer fortement le rendement du récepteur pour des ratios entre la puissance du signal interférent et la puissance du signal utile supérieur à 0 dB. En utilisant l'invention, les pertes de rapport signal à bruit sont limitées à 3 dB quel que soit le niveau du signal interférent.

L'invention s'applique pour tout type de récepteur de signaux, en particulier pour des récepteurs de signaux de radionavigation par satellite.

Le récepteur selon l'invention peut être mise en œuvre par des moyens logiciels ou matériels ou par une combinaison de techniques logicielles et matérielles.

Par exemple, le récepteur selon l'invention ou chacun des éléments qui le compose, peut être implémenté au moyen d'un processeur qui peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). L'invention peut utiliser un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel).

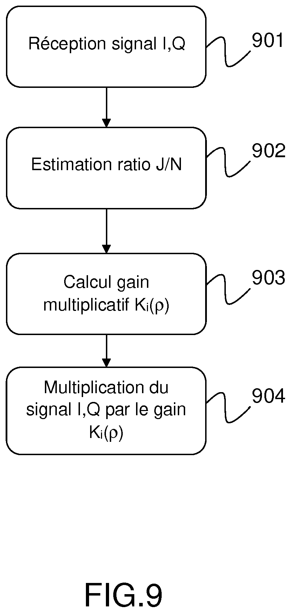

La figure 9 représente un organigramme décrivant les étapes d'un procédé de réception de signaux selon l'invention.

Selon la mise en œuvre de ce procédé, dans une étape 901, on reçoit un signal respectivement sur une voie en phase I et une voie en quadrature Q, par exemple après transposition d'un signal reçu en bande base. Dans une étape 902, on estime un ratio J/N entre la puissance d'un signal interférent et la puissance d'un bruit thermique de la façon décrite précédemment. Dans une étape 903, on calcule le gain multiplicatif $K_i(p)$ de la façon décrite ci-dessus, puis, dans une étape 904 on applique le gain multiplicatif respectivement à la voie en phase I et à la voie en quadrature Q du signal.

Dans un mode de réalisation particulier de l'invention, l'étape 902 d'estimation du ratio J/N est omise et on fixe a priori une valeur prédéterminée du ratio J/N, pour calculer une seule courbe du gain multiplicatif $K(\rho)$ en fonction du module $\rho$ du signal.

Annexe 1

Cette annexe vise à démontrer le principe donné par les relations (1) et (2) selon lequel le rapport signal à bruit mesuré sur les signaux $I_{optimal}$ et $Q_{optimal}$ est optimal lorsqu'on applique une fonction non linéaire au signal I, Q telle que définie par les relations suivantes, où P(I,Q) est la densité de probabilité du signal en deux dimensions :

$$I_{optimal}\ (I,Q)\ =\ -\,\partial P/\partial I\ /\ P(I,Q)\quad (1)$$

$$Q_{optimal}(I,Q)\ =\ -\,\partial P/\partial Q\ /\ P(I,Q)\quad (2)$$

Pour démontrer ce principe, on considère X une variable aléatoire non centrée, de moyenne m qui correspond à un signal réel, c'est-à-dire à une seule voie I ou Q. On cherche la fonction f impaire (ou anti-symétrique) non linéaire indépendante de m et qui maximise le rapport signal à bruit de la variable Y = f(X).

On note $P_{X,m}(x)$ la densité de probabilité de la variable X en fonction de x et $P_{Y,m}(y)$ la densité de probabilité de Y en fonction de y.

On fixe également les hypothèses suivantes :

$P_{X,m}(x) = P_{X,0}(x-m)$, car la densité de probabilité est invariante par translation de la moyenne m.

$$\int_{[-\infty,+\infty]} P_{X,0}(x)\, dx = 1 \qquad \text{car } P_{X,0} \text{ est une densité de probabilité.}$$

$$\int_{[-\infty,+\infty]} x\, P_{X,0}(x)\, dx = 0 \qquad \text{qui traduit le fait que la moyenne de } P_{X,0} \text{ est nulle.}$$

$$\int_{[-\infty,+\infty]} x^2\, P_{X,0}(x)\, dx = \sigma^2 \qquad \text{avec } \sigma^2 \text{ la variance de X et } \sigma \text{ l'écart-type.}$$

Les propriétés suivantes peuvent être formulées :

$$P_{X,m}(x) = f'(x) \cdot P_{Y,m}(y) = dy/dx \cdot P_{Y,m}(y)$$

$$P_{X,m}(x) \cdot dx = P_{Y,m}(y) \cdot dy$$

La moyenne de la variable X respecte les propriétés suivantes :

$$M_X(m) = \int_{[-\infty,+\infty]} x \cdot P_{X,m}(x)\, dx$$

$$M_X(m) = \int_{[-\infty,+\infty]} x \cdot P_{X,0}(x-m)\, dx$$

$$M_X(m) = \int_{[-\infty,+\infty]} (x-m) \cdot P_{X,0}(x-m)\, dx + m \cdot \int_{[-\infty,+\infty]} P_{X,0}(x-m)\, dx$$

$$M_X(m) = \int_{[-\infty,+\infty]} u \cdot P_{X,0}(u)\, du + m \cdot \int_{[-\infty,+\infty]} P_{X,0}(u)\, du$$

(changement de variable : u = x - m)

$$M_X(m) = m$$

La variance de la variable X respecte les propriétés suivantes :

$$V_X(m) = \int_{[-\infty,+\infty]} (x-m)^2 \cdot P_{X,m}(x)\, dx$$

$$V_X(m) = \int_{[-\infty,+\infty]} (x-m)^2 \cdot P_{X,0}(x-m)\, dx$$

$$V_X(m) = \int_{[-\infty,+\infty]} u^2 \cdot P_{X,0}(u)\, du$$

(changement de variable : u = x - m)

$$V_X(m) = \sigma^2$$

La moyenne m caractérise la part de signal utile dans la variable X. La variance $\sigma^2$ caractérise la part de bruit dans la variable X.

La moyenne de la variable Y respecte les propriétés suivantes :

$$M_Y(m) = \int_{[-\infty,+\infty]} y . P_{Y,m}(x) \, dy$$

$$M_Y(m) = \int_{[-\infty,+\infty]} f(x) . P_{X,m}(x) \, dx$$

(changement de variable d'intégration)

La variance de la variable Y respecte les propriétés suivantes :

$$V_Y(m) = \int_{[-\infty,+\infty]} y^2 . P_{Y,m}(x) \, dy$$

$$V_Y(m) = \int_{[-\infty,+\infty]} f(x)^2 . P_{X,m}(x) \, dx$$

(changement de variable d'intégration)

A partir de ces propriétés, on peut calculer le rapport signal sur bruit des variables X et Y.

Le rapport signal sur bruit pour la variable X est : $S/N_{X,m} = ( M_{X,m} )^2 / V_{X,m} = m^2/ \sigma^2$

Le rapport signal sur bruit pour la variable Y est : $S/N_{Y,m} = ( M_{Y,m} )^2 / V_{Y,m}$

La moyenne de la variable Y est :

$$M_Y(m) = \partial M_Y / \partial m \, (m) . m = \partial M_Y / \partial m \, (0) . m$$

pour m << 1 et

$M_Y(0) = 0$ (car la function f est impaire)

On a aussi:

$$\partial M_Y / \partial m \, (m) = \int_{[-\infty,+\infty]} f(x) . \partial P_{X,m} / \partial m \, (x) \, dx$$

$$\partial M_Y / \partial m \, (m) = - \int_{[-\infty,+\infty]} f(x) . P'_{X,0}(x-m) \, dx$$

$$\partial P_{X,m} / \partial m \, (x) = - P'_{X,0}(x-m) \quad car \quad P_{X,m}(x) = P_{X,0}(x-m)$$

$$\partial M_Y / \partial m \, (0) = - \int_{[-\infty,+\infty]} f(x) . P'_{X,0}(x) \, dx$$

La variance de la variable Y est:

$$V_Y(m) = \int_{[-\infty,+\infty]} f(x)^2 . P_{X,0}(x) \, dx$$

pour m << 1

Pour m << 1, le gain de rapport signal sur bruit R entre la variable Y et la variable X est donné par la relation suivante :

$$R = ( S/N_{Y,m} ) / ( S/N_{X,m} ) = [ \int_{[-\infty,+\infty]} f(x) . P'_{X,0}(x) \, dx ]^2 / [ \int_{[-\infty,+\infty]} f(x)^2 . P_{X,0}(x) \, dx ] . \sigma^2 .$$

Pour optimiser le rapport signal sur bruit R, la loi $P_{X,0}(x)$ étant donnée, on cherche la fonction f qui maximise le rendement R.

Si on note $R = C^2 / \psi . \sigma^2$.

L'optimisation de R revient à déterminer la fonction f optimale qui minimise le critère quadratique : $\psi = \int_{[-\infty,+\infty]}$

f(x)$^2$ . P$_{X,0}$(x) dx sous la contrainte linéaire : C = $\int_{[-\infty,+\infty]}$ f(x) . P$_{X,0}$'(x) dx = 1

La solution à ce problème d'optimisation est : f$_{optiomale}$(x) = λ . P$_{X,0}$'(x) / P$_{X,0}$(x)

Et, le rapport signal sur bruit maximal est :

$$R_{max}(P_{X,0}) \ = \ C^2 \ / \ \psi \ . \ \sigma^2 \ = \ \int_{[-\infty,+\infty]} P_{X,0}'(x)^2 \ / \ P_{X,0}(x) \ dx \ . \ \sigma^2.$$

## Revendications

**1.** Récepteur (200, 300, 400) de signaux susceptibles d'être perturbés par un signal interférent (100), le récepteur comprenant un filtre de réjection d'interférences comprenant un gain multiplicatif (250) appliqué respectivement à une voie en phase (I) et une voie en quadrature (Q) d'un signal reçu et numérisé par le récepteur, la valeur du gain multiplicatif étant déterminée par une fonction non linéaire K$_i$(ρ) du module p du signal reçu, la fonction K$_i$(ρ) étant déterminée de manière à maximiser le rapport signal à bruit après application du gain multiplicatif et démodulation du signal reçu, le récepteur comprenant en outre un estimateur (230) d'un ratio J/N entre la puissance d'un signal interférent et la puissance d'un bruit thermique, la fonction non linéaire K$_i$(ρ) dépendant dudit ratio J/N, la valeur du gain multiplicatif étant calculée à partir dudit ratio J/N et dudit module p du signal reçu, la fonction non linéaire K$_i$(ρ) dépendant de la densité de probabilité f(p) du signal reçu, fonction du module p du signal.

**2.** Récepteur de signaux selon la revendication 1 dans lequel la fonction non linéaire K$_i$(ρ) dépend du ratio entre la dérivée f'(p) de la densité de probabilité du signal reçu en fonction du module et la densité de probabilité f(p) du signal reçu, divisé par le module p du signal reçu.

**3.** Récepteur de signaux selon l'une des revendications 1 ou 2 dans lequel le filtre de réjection d'interférences comprend une unité de calcul (240) du module du signal reçu à partir de la voie en phase et de la voie en quadrature du signal reçu, le gain multiplicatif (250) étant implémenté par une mémoire dans laquelle sont sauvegardées une pluralité de valeurs de la fonction non linéaire K$_i$(ρ), la mémoire ayant une première entrée reliée à la sortie de l'unité de calcul du module (240).

**4.** Récepteur de signaux selon l'une des revendications 1 ou 2 dans lequel le gain multiplicatif (250) est implémenté par une mémoire dans laquelle sont sauvegardées une pluralité de valeurs de la fonction non linéaire K$_i$(ρ), la mémoire ayant une première entrée destinée à recevoir la valeur absolue de la voie en phase du signal, une deuxième entrée destinée à recevoir la valeur absolue de la voie en quadrature du signal.

**5.** Récepteur de signaux selon l'une des revendications précédentes dans lequel l'estimateur (230) d'un ratio entre la puissance d'un signal interférent et la puissance d'un bruit thermique comprend une unité de calcul du moment d'ordre quatre du module du signal.

**6.** Récepteur de signaux selon la revendication 5 dans lequel l'unité de calcul du moment d'ordre quatre comprend un additionneur (231) pour sommer la voie en phase du signal, élevée au carré, et la voie en quadrature du signal, élevée au carré, un multiplieur (232) pour élever au carré la sortie de l'additionneur (231) et un filtre moyenneur (233).

**7.** Récepteur de signaux selon l'une des revendications 5 ou 6 dans lequel l'estimateur (230) d'un ratio entre la puissance d'un signal interférent et la puissance d'un bruit thermique comprend en outre un organe de calcul du ratio entre le moment d'ordre quatre du signal et le moment d'ordre deux du signal élevé au carré.

**8.** Récepteur de signaux selon la revendication 7 comprenant au moins un dispositif de contrôle automatique de gain (211,221) configuré pour contrôler l'amplitude du signal reçu conformément à une consigne de puissance, le moment d'ordre deux du signal étant pris égal à la consigne en puissance du contrôle automatique de gain.

**9.** Récepteur de signaux selon l'une des revendications précédentes dans lequel la densité de probabilité f(p) du module du signal reçu est déterminée, pour une pluralité de valeurs du ratio J/N entre la puissance d'un signal interférent et la puissance d'un bruit thermique, à partir de la valeur de l'amplitude du signal interférent et de l'écart-type du bruit thermique.

**10.** Récepteur de signaux selon la revendication 1 en combinaison avec la revendication 3 ou la revendication 4 dans lequel la mémoire a une entrée supplémentaire reliée à la sortie de l'estimateur du ratio J/N.

**11.** Récepteur de signaux selon l'une des revendications précédentes dans lequel le signal interférent (100) est à enveloppe constante.

**12.** Récepteur de signaux selon l'une des revendications précédentes dans lequel les signaux reçus sont des signaux de radionavigation par satellite.

**13.** Procédé de réception de signaux susceptibles d'être perturbés par un signal interférent, comprenant les étapes de :

• Recevoir (901) respectivement une voie en phase (I) et une voie en quadrature (Q) d'un signal,
• Calculer (903) un gain multiplicatif à partir d'une fonction non linéaire $K_i(\rho)$ du module p du signal reçu, la fonction non linéaire $K_i(\rho)$ étant déterminée de manière à maximiser le rapport signal à bruit après application du gain multiplicatif et démodulation du signal reçu,
• Appliquer (904) le gain multiplicatif respectivement à la voie en phase (I) et à la voie en quadrature (Q) du signal numérisé,
• le procédé comprenant en outre une étape (902) d'estimation d'un ratio J/N entre la puissance d'un signal interférent et la puissance d'un bruit thermique, la fonction non linéaire $K_i(\rho)$ dépendant dudit ratio J/N, la valeur du gain multiplicatif étant calculée à partir dudit ratio J/N. et dudit module $\rho$ du signal reçu, la fonction non linéaire $K_i(\rho)$ dépendant de la densité de probabilité $f(\rho)$ du signal reçu, fonction du module $\rho$ du signal.

**14.** Procédé de réception de signaux selon la revendication 13 dans lequel la fonction non linéaire $K_i(\rho)$ dépend du ratio entre la dérivée $f'(\rho)$ de la densité de probabilité du signal reçu et la densité de probabilité $f(\rho)$ du signal reçu, divisé par le module $\rho$ du signal reçu.

**Patentansprüche**

**1.** Empfänger (200, 300, 400) für Signale, die dafür anfällig sind, durch ein Störsignal (100) gestört zu werden, wobei der Empfänger ein Störschutzfilter umfasst, welches eine multiplikative Verstärkung (250) umfasst, die jeweils auf einen phasengleichen Kanal (I) und einen um 90° phasenverschobenen Kanal (Q) eines von dem Empfänger empfangenen und digitalisierten Signals angewendet wird, wobei der Wert der multiplikativen Verstärkung durch eine nichtlineare Funktion $K_i(\rho)$ des Moduls p des empfangenen Signals bestimmt wird, wobei die Funktion $K_i(\rho)$ derart bestimmt wird, dass das Signal-Rausch-Verhältnis nach Anwenden der multiplikativen Verstärkung und Demodulation des empfangenen Signals maximiert wird, wobei der Empfänger ferner eine Schätzfunktion (230) für ein Verhältnis J/N zwischen der Leistung eines Störsignals und der Leistung eines thermischen Rauschens umfasst, wobei die nichtlineare Funktion $K_i(\rho)$ von dem Verhältnis J/N abhängt, wobei der Wert der multiplikativen Verstärkung anhand des Verhältnisses J/N und des Moduls p des empfangenen Signals berechnet wird, wobei die nichtlineare Funktion $K_i(\rho)$ von der Wahrscheinlichkeitsdichte $f(\rho)$ des empfangenen Signals, Funktion des Moduls p des Signals, abhängt.

**2.** Signalempfänger nach Anspruch 1, wobei die nichtlineare Funktion $K_i(\rho)$ von dem Verhältnis zwischen der Ableitung $f'(\rho)$ der Wahrscheinlichkeitsdichte des empfangenen Signals als Funktion des Moduls und der Wahrscheinlichkeitsdichte $f(\rho)$ des empfangenen Signals, geteilt durch das Modul $\rho$ des empfangenen Signals, abhängt.

**3.** Signalempfänger nach einem der Ansprüche 1 oder 2, wobei das Störschutzfilter eine Einheit (240) zum Berechnen des Moduls des empfangenen Signals anhand des phasengleichen Kanals und des um 90° phasenverschobenen Signals des empfangenen Signals umfasst, wobei die multiplikative Verstärkung (250) durch einen Speicher implementiert ist, in dem eine Vielzahl von Werten der nichtlinearen Funktion $K_i(\rho)$ gespeichert sind, wobei der Speicher einen ersten Eingang aufweist, der mit dem Ausgang der Modul-Berechnungseinheit (240) verbunden ist.

**4.** Signalempfänger nach einem der Ansprüche 1 oder 2, wobei die multiplikative Verstärkung (250) durch einen Speicher implementiert ist, in dem eine Vielzahl von Werten der nichtlinearen Funktion $K_i(\rho)$ gespeichert ist, wobei der Speicher einen ersten Eingang, der dafür vorgesehen ist, den absoluten Wert des phasengleichen Kanals des Signals zu empfangen, und einen zweiten Eingang aufweist, der dafür vorgesehen ist, den absoluten Wert des um 90° phasenverschobenen Kanals des Signals zu empfangen.

**5.** Signalempfänger nach einem der vorhergehenden Ansprüche, wobei die Schätzfunktion (230) für ein Verhältnis zwischen der Leistung eines Störsignals und der Leistung eines thermischen Rauschens eine Einheit zum Berechnen des Moments vierter Ordnung des Moduls des Signals umfasst.

6. Signalempfänger nach Anspruch 5, wobei die Einheit zum Berechnen des Moments vierter Ordnung einen Addierer (231) zum Summieren des phasengleichen Kanals, potenziert mit 2, und des um 90° phasenverschobenen Kanals des Signals, potenziert mit 2, einen Multiplikator (232) zum Potenzieren des Ausgangs des Addierers (231) und ein Mittelwertfilter (233) umfasst.

7. Signalempfänger nach einem der Ansprüche 5 oder 6, wobei die Schätzfunktion (230) für ein Verhältnis zwischen der Leistung eines Störsignals und der Leistung eines thermischen Rauschens ferner ein Rechenelement zum Berechnen des Verhältnisses zwischen dem Moment vierter Ordnung des Signals und dem Moment zweiter Ordnung des Signals, potenziert mit 2, umfasst.

8. Signalempfänger nach Anspruch 7, umfassend mindestens eine automatische Verstärkungssteuerungsvorrichtung (211, 221), die dafür konfiguriert ist, die Amplitude des empfangenen Signals gemäß einem Leistungseinstellwert zu steuern, wobei das Moment zweiter Ordnung des Signals als gleich dem Leistungseinstellwert der automatischen Verstärkungssteuerung angesehen wird.

9. Signalempfänger nach einem der vorhergehenden Ansprüche, wobei die Wahrscheinlichkeitsdichte $f(\rho)$ des Moduls des empfangenen Signals für eine Vielzahl von Werten des Verhältnisses J/N zwischen der Leistung eines Störsignals und der Leistung eines thermischen Rauschens anhand des Wertes der Amplitude des Störsignals und der Standardabweichung des thermischen Rauschens bestimmt wird.

10. Signalempfänger nach Anspruch 1 in Kombination mit Anspruch 3 oder Anspruch 4, wobei der Speicher einen zusätzlichen Eingang aufweist, der mit dem Ausgang der Schätzfunktion für das Verhältnis J/N verbunden ist.

11. Signalempfänger nach einem der vorhergehenden Ansprüche, wobei das Störsignal (100) eine konstante Hüllkurve aufweist.

12. Signalempfänger nach einem der vorhergehenden Ansprüche, wobei die empfangenen Signale Funknavigationssignale per Satellit sind.

13. Verfahren zum Empfangen von Signalen, die dafür anfällig sind, durch ein Störsignal gestört zu werden, umfassend die folgenden Schritte:

    • Empfangen (901) jeweils eines phasengleichen Kanals (I) und eines um 90° phasenverschobenen Kanals (Q) eines Signals,
    • Berechnen (903) einer multiplikativen Verstärkung anhand einer nichtlinearen Funktion $K_i(\rho)$ des Moduls $\rho$ des empfangenen Signals, wobei die nichtlineare Funktion $K_i(\rho)$ derart bestimmt wird, dass das Signal-Rausch-Verhältnis nach Anwenden der multiplikativen Verstärkung und Demodulation des empfangenen Signals maximiert wird,
    • Anwenden (904) der multiplikativen Verstärkung jeweils auf den phasengleichen Kanal (I) und den um 90° phasenverschobenen Kanal (Q) des digitalisierten Signals,
    • wobei das Verfahren ferner einen Schritt (902) zum Schätzen eines Verhältnisses J/N zwischen der Leistung eines Störsignals und der Leistung eines thermischen Rauschens umfasst, wobei die nichtlineare Funktion $K_i(\rho)$ von dem Verhältnis J/N abhängt, wobei der Wert der multiplikativen Verstärkung anhand des Verhältnisses J/N und des Moduls $\rho$ des empfangenen Signals berechnet wird, wobei die nichtlineare Funktion $K_i(\rho)$ von der Wahrscheinlichkeitsdichte $f(\rho)$ des empfangenen Signals, Funktion des Moduls p des Signals, abhängt.

14. Verfahren zum Empfangen von Signalen nach Anspruch 13, wobei die nichtlineare Funktion $K_i(\rho)$ von dem Verhältnis zwischen der Ableitung $f'(\rho)$ der Wahrscheinlichkeitsdichte des empfangenen Signals und der Wahrscheinlichkeitsdichte $f(\rho)$ des empfangenen Signals, geteilt durch das Modul $\rho$ des empfangenen Signals, abhängt.

**Claims**

1. A receiver (200, 300, 400) of signals likely to be disturbed by an interfering signal (100), the receiver comprising an interference rejection filter comprising a multiplying gain (250) applied respectively to an in-phase channel (I) and to an in-quadrature channel (Q) of a signal received and digitised by the receiver, the value of the multiplying gain being determined by a nonlinear function $K_i(\rho)$ of the modulus p of the received signal, the function $K_i(\rho)$ being determined so as to maximise the signal-to-noise ratio after application of the multiplying gain and demodulation of the received signal, the receiver further comprising an estimator (230) of a J/N ratio between the power of an interfering signal and the power of a thermal noise, the nonlinear function $K_i(\rho)$ depending on said J/N ratio, the value of the multiplicative gain being calculated from said J/N ratio and said modulus $\rho$ of the received signal, the not linear $K_i(\rho)$ function depending on the probability density $f(\rho)$ of the signal received, a function of the modulus $\rho$ of the signal.

2. The receiver of signals according to claim 1, wherein the nonlinear function $K_i(\rho)$ depends on the ratio between the derivative $f'(\rho)$ of the probability density of the received signal as a function of the module and the probability density $f(\rho)$ of the received signal, divided by the modulus $\rho$ of the received signal.

3. The receiver of signals according to any of claims 1 or 2, wherein the interference rejection filter comprises a unit (240) for computing the modulus of the received signal from the in-phase channel and from the in-quadrature channel of the received signal, the multiplying gain (250) being implemented by a memory in which are saved a plurality of values of the nonlinear function $K_i(\rho)$, the memory having a first input linked to the output of the modulus computation unit (240).

4. The receiver of signals according to one of claims 1 or 2, wherein the multiplying gain (250) is implemented by a memory in which are saved a plurality of values of the nonlinear function $K_i(\rho)$, the memory having a first input intended to receive the absolute value of the in-phase channel of the signal, a second input intended to receive the absolute value of the in-quadrature channel of the signal.

5. The receiver of signals according to one of the preceding claims, wherein the estimator (230) of a ratio between the power of an interfering signal and the power of a thermal noise comprises a unit for computing the fourth order moment of the modulus of the signal.

6. The receiver of signals according to claim 5, wherein the unit for computing the fourth order moment comprises an adder (231) for summing the in-phase channel of the signal, raised to the power of 2, and the in-quadrature channel of the signal, raised to the power of 2, a multiplier (232) for raising to the power of 2 the output of the adder (231) and an averaging filter (233).

7. The receiver of signals according to one of the claims 5 or 6, wherein the estimator (230) of a ratio between the power of an interfering signal and the power of a thermal noise further comprises a member for computing the ratio between the fourth order moment of the signal and the second order moment of the signal raised to the power of 2.

8. The receiver of signals according to claim 7, comprising at least one automatic gain control device (211, 221) configured to control the amplitude of the received signal in accordance with a power set point, the second order moment of the signal being taken to be equal to the power set point of the automatic gain control.

9. The receiver of signals according to one of the preceding claims, wherein the probability density $f(\rho)$ of the modulus of the received signal is determined, for a plurality of values of the ratio J/N between the power of an interfering signal and the power of a thermal noise, from the value of the amplitude of the interfering signal and from the standard deviation of the thermal noise.

10. The receiver of signals according to claim 1 in combination with claim 3 or claim 4, wherein the memory has an additional input linked to the output of the estimator of the ratio J/N.

11. The receiver of signals according to one of the preceding claims, wherein the interfering signal (100) has a constant envelope.

12. The receiver of signals according to one of the preceding claims, wherein the received signals are satellite radio navigation signals.

13. A method for receiving signals likely to be disturbed by an interfering signal, comprising the steps of:

   • receiving (901) respectively an in-phase channel (I) and an in-quadrature channel (Q) of a signal,
   • computing (903) a multiplying gain from a nonlinear function $K_i(\rho)$ of the modulus $\rho$ of the received signal, the nonlinear function $K_i(\rho)$ being determined so as to maximise the signal-to-noise ratio after application of the multiplying gain and demodulation of the received signal,

• applying (904) the multiplying gain respectively to the in-phase channel (I) and to the in-quadrature channel (Q) of the digitised signal,

• the method further comprising a step (902) of estimating a ratio J/N between the power of an interfering signal and the power of a thermal noise, the nonlinear function $K_i(\rho)$ depending on said ratio J/N, the value of the multiplicative gain being calculated from said ratio J/N and said modulus p of the received signal, the nonlinear function $K_i(\rho)$ depending on the probability density $f(\rho)$ of the received signal, a function of the modulus $\rho$ of the signal.

14. The method for receiving signals according to claim 13, wherein the nonlinear function $K_i(\rho)$ depends on the ratio between the derivative $f'(\rho)$ of the probability density of the received signal and the probability density $f(\rho)$ of the received signal, divided by the modulus $\rho$ of the received signal.

FIG.1

FIG.2

FIG.3

FIG.4

FIG.5

EP 3 502 746 B1

FIG.6

FIG.7

FIG.8

Réception signal I,Q — 901

Estimation ratio J/N — 902

Calcul gain multiplicatif $K_i(\rho)$ — 903

Multiplication du signal I,Q par le gain $K_i(\rho)$ — 904

# FIG.9

**RÉFÉRENCES CITÉES DANS LA DESCRIPTION**

**Documents brevets cités dans la description**

- EP 2336800 A

- US 6816539 B

**Littérature non-brevet citée dans la description**

- **TRINKLE et al.** *GPS interference mitigation; Overview and experimental results,* 01 Janvier 2001

- **PRZY JEMSKI JOSEPH et al.** *GPS Anti- Jam Enhancement Techniques,* 23 Juin 1993